# EUROPEAN PATENT SPECIFICATION

(11) **EP 4 064 589 B1**
(45) Date of publication and mention of the grant of the patent: **28.01.2026**
(21) Application number: 20891021.6
(22) Date of filing: 18.11.2020
(51) Int. Cl.: H04J 3/06

(54) **ETHERNET TIME SYNCHRONIZATION METHOD AND APPARATUS**
ETHERNET-ZEITSYNCHRONISATIONSVERFAHREN UND -VORRICHTUNG
PROCÉDÉ ET APPAREIL DE SYNCHRONISATION D'HEURE ETHERNET

(30) Priority: 19.11.2019 CN 201911136134
(43) Date of publication of application: 28.09.2022
(73) Proprietor: Sanechips Technology Co., Ltd., Shenzhen, Guangdong 518055 (CN)
(72) Inventor: SUN, Hao, Shenzhen, Guangdong 518055 (CN)
(74) Representative: Canzler & Bergmeier Patentanwälte Partnerschaft mbB
(86) International application number: PCT/CN2020/129834
(87) International publication number: WO 2021/098733

(56) References cited:
- WO-A1-2018/210277
- WO-A1-2019/165965
- CN-A- 102 970 095
- CN-A- 103 647 615
- CN-A- 103 812 592
- US-A1- 2016 352 500
- US-A1- 2019 273 571

## Description

### Technical Field

The present invention relates to the field of communication, in particular to a method and an apparatus for time synchronization of Ethernet.

### Background

Development of communication technology puts forwards increasingly higher requirements for synchronization precision of existing time synchronization technology. Especially with the development of 5G wireless communication, synchronization precision of network apparatuses is required to be within 10 nanoseconds. Generally, while traditional GPS synchronization methods are limited by environment and cost, precision of an existing synchronization method based on Ethernet 1588 is limited by a bottom layer, and can merely reach tens of nanoseconds to microseconds due to uncertain delays in common cases.

US Patent Application US2016352500 A1 discloses that a method for determining a slave clock to master clock time difference with an alignment marker. The method selects and transmits a first alignment marker at a first time by a transmitter that has a master clock in a first message to a receiver that has a slave clock. Subsequent to transmitting the first message, the method further transmits a second message that contains the first time and an identity of the first alignment marker. The method further receives the first message and records a second time that the first message is received. The method further receives the second message and the first time and the identity of the first alignment marker. The method further determines a transmission delay and generates a time difference from the slave clock to the master clock.

The publication of the International Patent Application WO2019165965 A1 discloses that a method for determining time information, comprising: detecting a signal of a periodic code block, and recording a time stamp of the periodic code block; according to the time stamp of a periodic code block matching a time information message, determining the time at which the time information message was sent, and generating a time stamp of the time information message. Further disclosed herein are an apparatus, device and storage medium for determining time information.

### Summary

Embodiments of the present invention provides a method and an apparatus for time synchronization of Ethernet, which at least solve the problems of uncertain delays and low synchronization precision of a synchronization manner based on Ethernet 1588 in related arts.

The invention is set out in the appended set of claims.

### Brief Description of the Drawings

Accompanying drawings described herein are used for providing further understanding of the present invention and constitute part of the disclosure. Schematic embodiments of the present invention and descriptions thereof are used to explain the present invention, but not constitute an improper limit to the present invention. In the accompanying drawings:
Fig. 1 is a flowchart of a method for time synchronization of Ethernet according to an embodiment of the present invention;
Fig. 2 is a schematic diagram showing adding timestamps to 1588 event message headers on boundaries A, B and C according to an embodiment of the present invention;
Fig. 3 is a schematic diagram of boundary AA and a relationship between various function modules according to an embodiment of the present invention;
Fig. 4 is a schematic diagram of a time relationship between transmission and receipt of the same 1588 event message on boundary A and boundary AA by a transmission side and a receipt side according to an embodiment of the present invention;
Fig. 5 is a schematic diagram showing transmission of a 1588 event message according to an embodiment of the present invention.
Fig. 6 is a structural schematic diagram of an apparatus for time synchronization of Ethernet according to an embodiment of the present invention; and
Fig. 7 is a structural schematic diagram of an apparatus for time synchronization of Ethernet according to another embodiment of the present invention.

### Detailed Description of the Embodiments

The present invention will be described in detail below with reference to the accompanying drawings and in conjunction with embodiments. It should be noted that examples in the disclosure and features in the examples may be combined with one another if there is no conflict.

It should be noted that the terms "first", "second", etc. in the specification and claims of the present invention and the above accompanying drawings are used to distinguish similar objects, but are not necessarily used to describe a specific sequence or a precedence order.

In order to overcome the problem that in the prior art, since a 1588 event message header is used for being subjected to timestamp adding at an interface between a medium access control (MAC) and a physical layer (PHY), a delay exists in the PHY and synchronization precision is reduced accordingly, the embodiment of the present invention provides a method for time synchronization. In this embodiment, based on a 1588 synchronization manner, an existing solution of adding a timestamp to a 1588 event message header is replaced by adding a timestamp to an alignment mask (AM) of a physical coding sublayer (PCS) in the PHY, thereby improving the time synchronization precision.

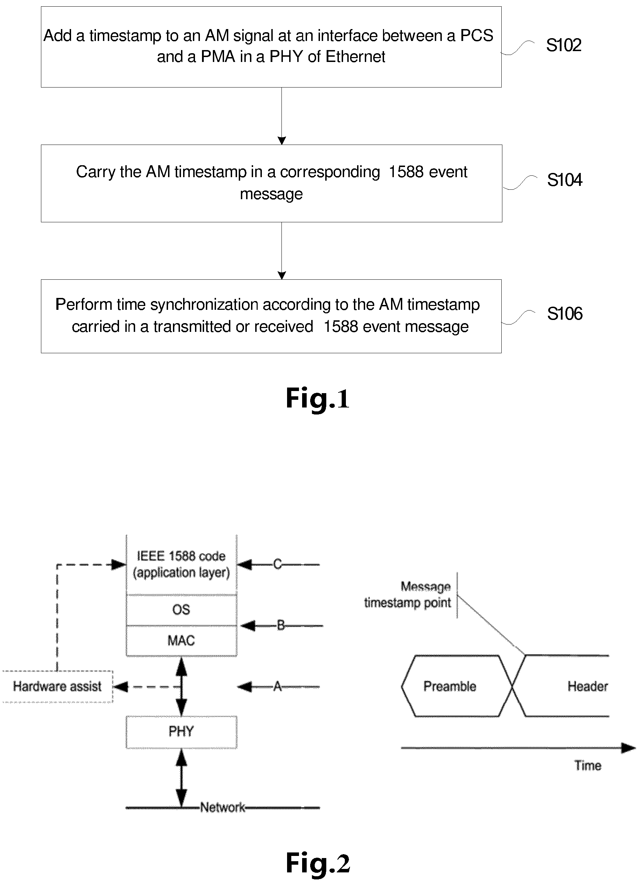

Fig. 1 is a flowchart of a method for time synchronization of Ethernet according to an embodiment of the present invention. As shown in Fig. 1, the flow includes:
S102, a timestamp is added to an alignment mask (AM) signal at an interface between a physical coding sublayer (PCS) and a physical medium attachment (PMA) in a physical layer (PHY) of Ethernet;
S104, the AM timestamp is carried in a corresponding 1588 event message; and
S106, time synchronization is performed according to the AM timestamp carried in a transmitted or received 1588 event message.

The above embodiment will be described in detail below from a transmission direction and a receipt direction.

In the transmission direction:
1. The MAC perceives generation time of each AM. In this embodiment, the AM may be generated in the PCS, then the MAC is notified of the AM, or the MAC may help the PCS generate the AM and send same to the PCS.
2. When the AM passes through the interface (called point AA) between the PCS and the PMA upon completion of data stream processing in the PCS, AM transmission detection logic at point AA may detect presence of the AM, and simultaneously ask a 1588 timestamp adding function module to record an AM sending timestamp.
3. The 1588 timestamp adding function module posts the AM sending timestamp back to the MAC.
4. The MAC obtains a time window for sending the 1588 event message by taking sensed generation time of each AM as a start point, the 1588 event message is controlled to be transmitted in the time window, and a timestamp field carried in the message during transmission is updated to the latest AM sending timestamp currently received.

In the receipt direction:
1. AM receipt detection logic at point AA may detect presence of the AM, and simultaneously ask the 1588 timestamp adding function module to record an AM receiving timestamp.
2. The 1588 timestamp function adding module posts the AM receiving timestamp back to the MAC.
3. When receiving the 1588 event message transmitted, the MAC takes a newly received AM receiving timestamp, establishes an association between the 1588 event message and the AM receiving timestamp, and reports the 1588 event message and the AM receiving timestamp to a high-layer protocol function module.

From the above description of the embodiment, it may be clearly understood by those skilled in the art that the method according to the above embodiment may be implemented by means of software plus necessary general hardware platform, and may be certainly implemented by the hardware, among which the former is a preferred embodiment in many cases. Based on such understanding, the technical solution in essence of the present invention or the part that contributes to the prior art may be embodied in the form of software products, the computer software products are stored in the storage medium (such as a read-only memory /a random access memory (ROM/RAM), a diskette and an optical disk), and include several instructions to make terminal devices (which may be a mobile phone, a computer, a server, a network device, etc.) execute the method of each embodiment of the present invention.

An embodiment of the present invention further provides an apparatus for time synchronization of Ethernet is provided. The apparatus for time synchronization of Ethernet includes a high-layer protocol function module, a 1588 timestamp adding function module, a physical medium attachment (PMA) module, a medium access control (MAC) module, a physical coding sublayer (PCS) module, and an AM transmission and receipt detection function module.

The high-layer protocol module, the PMA module and the 1588 timestamp adding module are basically the same as those in the prior art, functions of the MAC module and the PCS module are modified correspondingly, and the AM transmission and receipt detection function module is newly added.

The functions of each module and data interaction between modules will be described in detail below.

The MAC processes a transmitted data message transmitted by a high layer into frames and then transmits the frames to a PCS transmission channel, and processes the frames received by a PCS receipt channel and then transmits the frames to the high-layer protocol module. The data massage includes a non-1588 event service message and a 1588 event message. For the transmitted 1588 event message, the MAC needs to update the latest AM sending timestamp, transmitted by the 1588 timestamp adding function module, into a message field. In the case where the 1588 event message is identified at an MAC receipt side, the MAC may associate the latest AM receiving timestamp transmitted by the 1588 timestamp adding function module with a current 1588 message and inform the higher layer of the AM receiving timestamp.

The PCS receives, in a transmission direction, the frames transmitted by the MAC, encodes the frames and sends the frames to the PMA, and the PCS receives, in a receipt direction, data of the PMA, decodes the data and sends frames to the MAC. In the transmission direction, if the MAC provides an AM generation function, the PCS directly skips AM generation logic for subsequent coding, and if the PCS generates the AM itself, AM generation time needed to be fed back to the MAC. In addition, the PCS may provide some auxiliary information to help an external AM transmission and receipt detection function module according to needs.

The AM transmission and receipt detection function module detects AM information in transmission and receipt data of interaction between the PCS and the PMA at the boundary AA, and notifies the 1588 timestamp adding module of adding of the AM transmission and receiving timestamp when AM is detected.

When receiving transmission and receiving timestamp adding requests when the AM transmission and receipt detection function module detects the AM, the 1588 timestamp adding module records the timestamp information with a 1588 clock, and then transmits the two-channel timestamp information to the MAC.

Compare with the prior art, in the above embodiment, a delay error of a bottom layer is reduced, and an effect of improving the time synchronization precision is achieved.

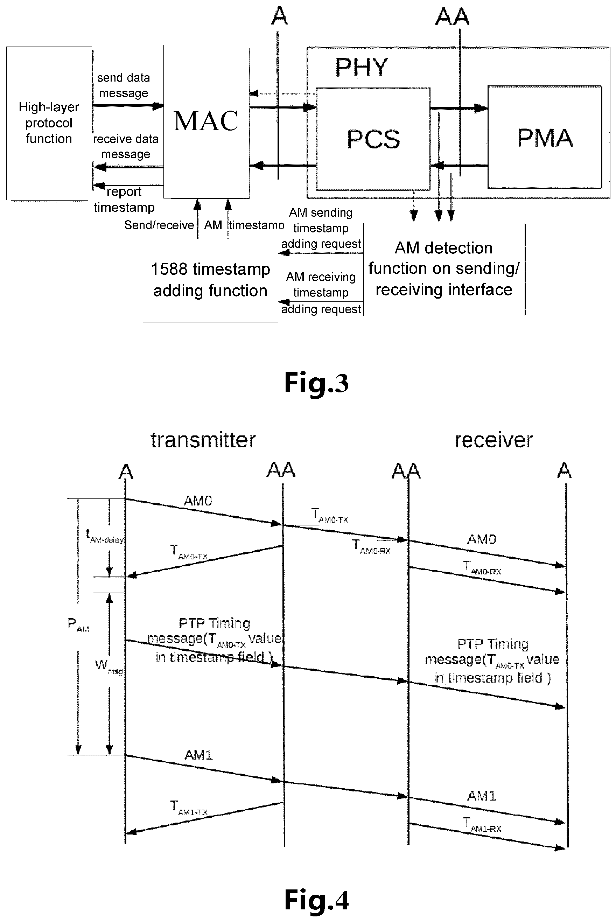

The embodiment of the present invention will be further described in detail with reference to the following accompanying drawings:
As shown in Fig. 2, with the existing 1588 technology, a timestamp is added sequentially at boundary C, boundary B and boundary A downwards from a high layer. Boundary A is the lowest-layer boundary, that is, a boundary between the MAC and the PHY. A trigger point of timestamp adding at the boundary is the 1588 event message header. If the timestamp is added at the lowest-layer boundary A, there is still a delay error in the PHY that affects the time synchronization precision.
As shown in Fig. 3, the boundary AA is set at a lower layer of the original boundary A, that is, between the PCS and the PMA in PHY, and the timestamp is added at boundary AA. Since the 1588 event message is random data at this boundary and is difficult to identify, in this boundary, the AM that originally exists in the PCS and may be identified may be used to be subjected to timestamp adding instead of the 1588 event message header. In the original 1588 event message, transmission and receiving timestamp adding are triggered by the same message header data, but now the same AM.

The AM used in the embodiment of the present invention is a special code pattern added in a PCS protocol, is generated in a fixed period and is carried in the PCS processing data stream for being transmitted during transmission, and the AM in the data stream during receipt is used for PCS receipt synchronization alignment. As shown in Fig. 4, the AM is a mask periodically generated with a fixed period P_{AM}. The MAC on the transmission side perceives AM0, and the AM0 is encoded by the PCS and output to the boundary AA. When detecting the AM0 at the boundary AA, the AM transmission/receipt detection function module notifies the 1588 timestamp adding function module of adding of a timestamp T_{AM0-TX}, and the 1588 timestamp adding module posts the timestamp back to the MAC for the round-trip transmission time being t_{AM-delay}. Since the PCS transmission channel has uncertain delays, t_{AM-delay} is an uncertain value. The MAC needs to guarantee that the 1588 event message may only be transmitted in the time window W_{msg} before the next AM1 is generated and after a timestamp corresponding to AM0 is transmitted to the MAC, otherwise, transmission and receipt AM may not be identical to a current AM bound to the 1588 event message. It is assumed that the 1588 event message exceeds an upper boundary of the time window corresponding to AM0, that is, t_{AM-delay} after AM0 is sensed is insufficient to transmit the 1588 event message, the latest AM sending timestamp is to be taken when the event message is transmitted, a historical value, that is, a previous AM sending timestamp may be taken before the sending timestamp of the AM0 is returned. In this case, a transmitted AM bound to the 1588 event message at the transmission side is the previous AM, while a receiving AM is the current AM0 bound. It is assumed that the 1588 event message exceeds a lower boundary of the time window corresponding to AM0, that is, after AM1 is sensed, when the timestamp of sending AM1 is not updated completely, the 1588 event is transmitted, the AM bound at the transmission side is still AM0, but an AM bound at the receipt side may be AM1.

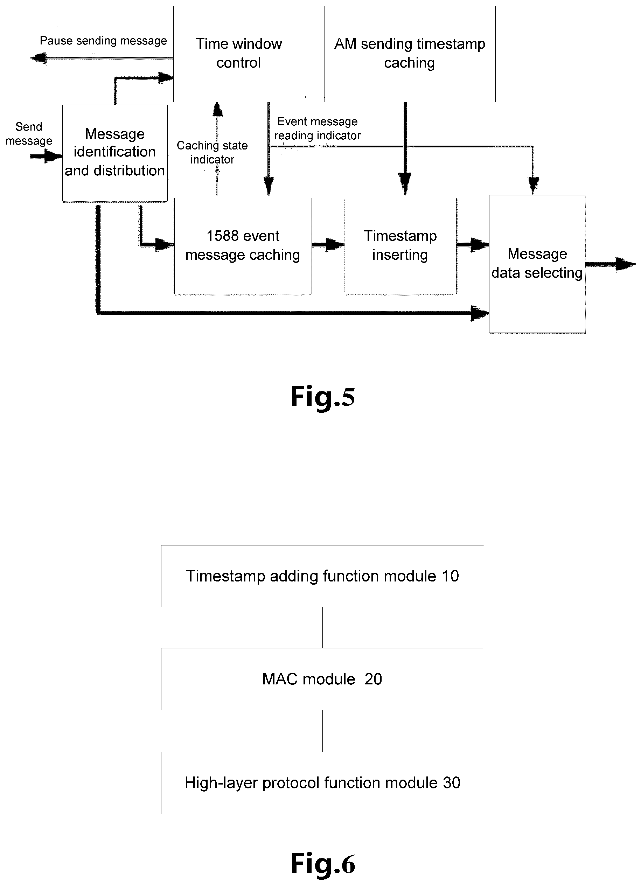

As shown in Fig. 5, the 1588 event message at the transmission side is controlled to be transmitted in the transmission window of AM0 at boundary point A. In this case, the timestamp field in the transmitted event message is updated to the AM0 sending timestamp t_{AM0-TX} at point AA. When the transmitted event message is transmitted to point AA at the receipt side through the bottom layer after passing through point AA at the transmission side, AM0 has already arrived at point AA at the receipt side before the transmitted event message passes, and is detected by the AM receipt detection function module. An AM0 receiving timestamp T_{AM0-RX} is recorded by the 1588 timestamp adding function module, and arrives before point A at the receipt side receives the 1588 event message. Therefore, the latest AM receiving timestamp bound and used when point A receives the corresponding transmitted 1588 event message is the AM0 receiving timestamp T_{AM0-RX}.

Since the upper-layer protocol does not get time of a bottom-layer window, and a delay between the upper layer to the MAC is not fixed, a time when the MAC receives the 1588 event message is random. However, the 1588 event message, but other messages, is limited by the sending time window, the 1588 message may not be forwarded immediately, thereby posing additional control over an MAC transmission channel. A structure for sending the 1588 event message is shown in Fig. 5.

After a message transmitted by the high-layer protocol function module is identified and distributed, the 1588 event message is separated and written into a 1588 event message caching module. If a message enters the 1588 event message caching module, a caching state is transmitted to a time window control module. When it is observed from a time window obtained by the time window control module that the caching state is not empty and a message identification and distribution module does not detect message transmission, an output message tentatively requests that a notice that package transmission is not permitted is sent to a source, then the 1588 event message caching module is notified of reading of the message, and a data selection module is switched to an option of output of the 1588 time message.

When the 1588 event message caching module outputs the message to a timestamp insertion module, the timestamp insertion module reads the timestamp from the cached AM sending timestamp, and inserts the timestamp into an internal field of the message, and finally the timestamp is selected and output by means of the data selection module.

For the AM timestamp caching module, after each AM is transmitted, the AM sending timestamp is input to the AM timestamp caching module, so as to update an old value to the latest input value.

When the AM sending timestamp is transmitted, the caching state of the 1588 event message caching module is empty after the 1588 event message is transmitted, and the time window control module withdraws transmitted message for stop, and withdraws an event message reading instruction and 1588 event message data selection control, and the transmitted non-1588 event message passes through the message data selection module to be output.

The above technical solution provided by the embodiment of the present invention is applicable to all systems that use the AM in the PCS, including a PCS with multiple channels and scenes where Reed-solomon forward error correction coding (RSFEC) is used in single channel. For multi-channel scenes, a timestamp is needed to be added to the AM of only one physical channel. Especially for complex multi-channel scenarios, due to different delays of the channels, the delays of the PCS are greater in uncertainty, and the time synchronization precision for this system is more profitable.

In this embodiment, an apparatus for time synchronization of Ethernet is further provided, the apparatus is used to implement the above embodiment and the preferred embodiment, and details which are described above will not be repeated herein. As used below, the term "module" may be a combination of software and/or hardware that achieves a predetermined function. Although the apparatuses described in the following embodiments are preferably implemented by software, it is possible to conceive implementation by hardware, or the combination of software and hardware.

The embodiment of the present invention provides an apparatus for time synchronization of Ethernet. Fig. 6 is a structural block diagram of the apparatus for time synchronization of Ethernet according to the embodiment of the present invention. This embodiment is different from the previous apparatus embodiments in division of module functions. As shown in Fig. 6, the apparatus includes a timestamp adding function module 10, a MAC module 20 and a high-layer protocol function module 30.
a timestamp adding function module 10 configured to add a timestamp to an alignment mask (AM) signal at an interface between a physical coding sublayer (PCS) and a physical medium attachment (PMA) in a physical layer (PHY) of Ethernet; a medium access control (MAC) module 20 configured to carry the AM timestamp in a corresponding 1588 event message; and a high-layer protocol function module 30 configured to perform time synchronization according to the AM timestamp carried in a transmitted or received 1588 event message.

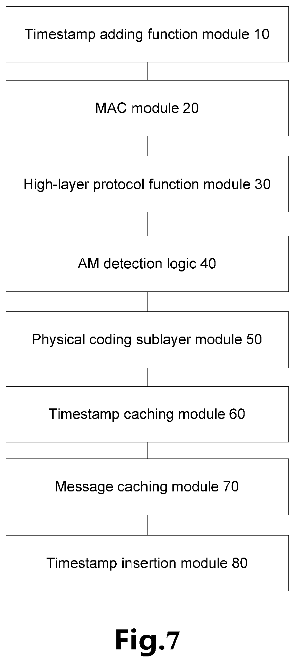

Fig. 7 is a structural block diagram of an apparatus for time synchronization of Ethernet according to an embodiment of the present invention. As shown in Fig. 7, the apparatus includes AM detection logic 40, a physical coding sublayer module 50, a timestamp caching module 60, a message caching module 70 and a timestamp insertion module 80 in addition to all the modules shown in Fig. 6.

The AM detection logic 40 is configured to detect, when an alignment mask (AM) passes through an interface between a physical coding sublayer (PCS) and a physical medium attachment (PMA) along with a transmitted data stream, presence of the AM, and ask a timestamp adding function module to record an AM sending timestamp.

The timestamp adding function module 10 is further configured to post the AM sending timestamp back to a medium access control (MAC) module 20. The MAC module 20 is further configured to carry the AM sending timestamp in the corresponding transmitted 1588 event message.

The MAC module 20 is further configured to obtain a time window for sending the 1588 event message by taking the sensed generation time of the AM as a start point and transmit the 1588 event message in the time window.

The timestamp caching module 60 is configured to cache the AM sending timestamp, and update the cached AM sending timestamp when a next AM sending timestamp is received.

The event message caching module 70 is configured to cache the 1588 event message transmitted by the high-layer protocol function module 30.

The timestamp insertion module 80 is configured to insert the cached AM sending timestamp into a timestamp field of the 1588 event message.

The AM detection logic 40 is further configured to detect, when the AM passes through the interface between the PCS and the PMA along with a received data stream, presence of the AM by AM detection logic, and ask a timestamp adding function module to record the AM receiving timestamp.

The timestamp adding function module 10 is further configured to post the AM receiving timestamp back to the MAC.

The MAC module 20 is further configured to associate the AM receiving timestamp with the corresponding received 1588 event message, and report the AM receiving timestamp to the high-layer protocol function module 30.

It should be noted that the above modules may be implemented by software or hardware, and the latter may be implemented, without limitation, in the following ways: the above modules are all located in the same processor; or, the above modules are separately located in different processors in any combination.

An embodiment of the present invention further provides a storage medium, where a computer program is stored in the storage medium, the computer program being configured to execute the steps in the above embodiment of the method when run.

In an embodiment, in this embodiment, the foregoing storage medium may include, but is not limited to, a USB flash drive, a read-only memory (ROM) , a random access memory (RAM), a mobile hard disk drive, a diskette or optical disk, etc., which may store the computer program.

An embodiment of the present invention further provides an electronic apparatus. The electronic apparatus includes a memory and a processor, where a computer program is stored in the memory, and the processor is configured to run the computer program to execute the steps in the above method embodiment.

It will be apparent to a person skilled in the art that the various modules or steps of the present invention may be implemented by a general-purpose computing apparatus that may be centralized on a single computing apparatus or distributed across a network formed by multiple computing apparatuses. In an embodiment, they may be implemented by program codes executable by the computing apparatus, such that they may be stored in a storage apparatus and executed by the computing apparatus, and in some cases, the steps shown or described may be performed in a sequence different from the sequence described herein, or they may be separately fabricated into individual integrated circuit modules, or multiple modules or steps thereof may be implemented as a single integrated circuit module. In this way, the present invention is not limited to any specific hardware and software combination.

## Claims

1. A method for time synchronization of Ethernet, comprising:
adding a timestamp to an alignment mask, AM, signal at an interface between a physical coding sublayer, PCS, and a physical medium attachment, PMA, in a physical layer, PHY, of Ethernet;
carrying the AM timestamp in a corresponding 1588 event message; and
performing time synchronization according to the AM timestamp carried in a transmitted or received 1588 event message,
wherein the adding a timestamp to an AM signal comprises:
adding a sending timestamp to the AM signal and adding a receiving timestamp to the AM signal,
wherein the adding a sending timestamp to the AM signal comprises:
detecting, when an AM passes through the interface between the PCS and the PMA along with a transmitted data stream, presence of the AM by AM detection logic, and informing a 1588 timestamp adding function module to record the AM sending timestamp;
pushing, by the 1588 timestamp adding function module, the AM sending timestamp back to a medium access control, MAC; and
carrying, by the MAC, the AM sending timestamp in the corresponding transmitted 1588 event message.

2. The method according to claim 1, wherein before the AM passes through the interface between the PCS and the PMA along with a transmitted data stream, the method further comprises:
sensing, by the MAC, generation time of the AM.

3. The method according to claim 2, wherein before the carrying, by the MAC, the AM sending timestamp in the corresponding transmitted 1588 event message, the method further comprises:
obtaining, by the MAC, a time window for sending the 1588 event message by taking the sensed generation time of the AM as a start point, and sending the 1588 event message in the time window.

4. The method according to claim 3, wherein a start point of the time window is later than time when the AM timestamp is returned to the MAC after the timestamp is added, by the 1588 timestamp adding function module, to the AM signal detected at the interface between the PCS and PMA when the MAC senses that a current AM passes through the PCS, and an end point of the time window is time when the MAC senses a next AM.

5. The method according to claim 3, wherein after the pushing, by the 1588 timestamp adding function module, the AM sending timestamp back to a MAC, the method further comprises:
caching the AM sending timestamp; and
updating the cached AM sending timestamp when a next AM sending timestamp is received.

6. The method according to claim 5, wherein the carrying, by the MAC, the AM sending timestamp in the corresponding transmitted 1588 event message comprises:
caching the 1588 event message transmitted by a high-layer protocol; and
sending the cached 1588 event message in the sending time window, retrieving an AM timestamp from the cached AM sending timestamp during transmission and inserting the AM timestamp into a timestamp field of the 1588 event message.

7. The method according to claim 1, wherein the adding a receiving timestamp to the AM signal comprises:
detecting, when the AM passes through the interface between the PCS and the PMA along with a received data stream, presence of the AM by AM detection logic, and informing a 1588 timestamp adding function module to record the AM receiving timestamp;
pushing, by the 1588 timestamp adding function module, the AM receiving timestamp back to a MAC; and
associating, by the MAC, the AM receiving timestamp with the corresponding received 1588 event message, and reporting the AM receiving timestamp to a high-layer protocol.

8. The method according to claim 1, wherein the PCS is a multi-channel PCS or a single-channel PCS, and when the PCS is a multi-channel PCS, the timestamp is added to an AM signal in only one channel.

9. An apparatus for time synchronization of Ethernet, comprising:
a timestamp adding function module, configured to add a timestamp to an alignment mask, AM, signal at an interface between a physical coding sublayer, PCS, and a physical medium attachment, PMA, in a physical layer, PHY, of Ethernet;
a medium access control, MAC, module configured to carry the AM timestamp in a corresponding 1588 event message; and
a high-layer protocol function module, configured to perform time synchronization according to the AM timestamp carried in a transmitted or received 1588 event message,
wherein the AM timestamp comprises an AM sending timestamp and an AM receiving timestamp;
the apparatus further comprising:
AM detection logic, configured to detect, when the AM passes through the interface between the PCS and the PMA along with a transmitted data stream, presence of the AM, and to ask the timestamp adding function module to record the AM sending timestamp; wherein
the timestamp adding function module, is further configured to post the AM sending timestamp back to the MAC module; and
the MAC module, is further configured to carry the AM sending timestamp in the corresponding transmitted 1588 event message.

10. The apparatus according to claim 9, wherein the MAC module is further configured to sense generation time of the AM;
the MAC module, is further configured to obtain a time window for sending the 1588 event message by taking the sensed generation time of the AM as a start point, and to transmit the 1588 event message in the time window;
wherein a start point of the time window is later than time when the AM timestamp is returned to the MAC after the timestamp is added, by the 1588 timestamp adding function module, to the AM signal detected at the interface between the PCS and PMA when the MAC senses that a current AM passes through the PCS, and an end point of the time window is time when the MAC senses a next AM.

11. The apparatus according to claim 10, further comprising:
a timestamp caching module, configured to cache the AM sending timestamp, and to update the cached AM sending timestamp when a next AM sending timestamp is received;
a 1588 event message caching module, configured to cache the 1588 event message transmitted by a high-layer protocol; and
a timestamp insertion module, configured to transmit the cached 1588 event message in the sending time window, retrieve an AM timestamp from the cached AM sending timestamp during transmission and insert the AM timestamp into a timestamp field of the 1588 event message.

12. The apparatus according to claim 9, further comprising:
AM detection logic, configured to detect, when the AM passes through the interface between the PCS and the PMA along with a received data stream, presence of the AM by AM detection logic, and to ask a timestamp adding function module to record the AM receiving timestamp; wherein
the timestamp adding function module, is further configured to post the AM receiving timestamp back to a MAC; and
the MAC module, is further configured to associate the AM receiving timestamp with the corresponding received 1588 event message, and report the AM receiving timestamp to a high-layer protocol.

## Patentansprüche

1. Verfahren zur Zeitsynchronisation von Ethernet, umfassend:
Hinzufügen eines Zeitstempels zu einem Alignment-Masken-, AM,-Signal an einer Schnittstelle zwischen einer physikalischen Codierungsteilschicht, PCS, und einer physikalischen Medienanpassung, PMA, in einer physikalischen Schicht, PHY, von Ethernet;
Übertragen des AM-Zeitstempels in einer entsprechenden 1588-Ereignisnachricht; und
Durchführen einer Zeitsynchronisation entsprechend dem AM-Zeitstempel, der in einer gesendeten oder empfangenen 1588-Ereignisnachricht übertragen wird,
wobei das Hinzufügen eines Zeitstempels zu einem AM-Signal umfasst:
Hinzufügen eines Sendezeitstempels zu dem AM-Signal und Hinzufügen eines Empfangszeitstempels zu dem AM-Signal,
wobei das Hinzufügen eines Sendezeitstempels zu dem AM-Signal umfasst:
Erkennen, wenn ein AM zusammen mit einem übertragenen Datenstrom die Schnittstelle zwischen der PCS und der PMA durchläuft, einer Anwesenheit des AM durch AM-Erkennungslogik und Informieren eines 1588-Zeitstempel-Hinzufügungsfunktionsmoduls, den AM-Sendezeitstempel aufzuzeichnen;
Zurückübermitteln des AM-Sendezeitstempels durch das 1588-Zeitstempel-Hinzufügungsfunktionsmodul an eine Medienzugriffssteuerung, MAC; und
Tragen des AM-Sendezeitstempels durch die MAC in der entsprechenden übertragenen 1588-Ereignisnachricht.

2. Verfahren nach Anspruch 1, wobei, bevor das AM zusammen mit einem übertragenen Datenstrom die Schnittstelle zwischen der PCS und der PMA durchläuft, das Verfahren ferner umfasst:
Erfassen einer Erzeugungszeit des AM durch die MAC.

3. Verfahren nach Anspruch 2, wobei, bevor das Tragen des AM-Sendezeitstempels durch die MAC in der entsprechenden übertragenen 1588-Ereignisnachricht erfolgt, das Verfahren ferner umfasst:
Erhalten eines Zeitfensters zum Senden der 1588-Ereignisnachricht durch die MAC durch Verwenden der erfassten Erzeugungszeit des AM als Startpunkt und Senden der 1588-Ereignisnachricht in dem Zeitfenster.

4. Verfahren nach Anspruch 3, wobei ein Startpunkt des Zeitfensters später ist als der Zeitpunkt, zu dem der AM-Zeitstempel an die MAC zurückgegeben wird, nachdem der Zeitstempel durch das 1588-Zeitstempel-Hinzufügungsfunktionsmodul zu dem an der Schnittstelle zwischen der PCS und der PMA erkannten AM-Signal hinzugefügt wird, wenn die MAC erfasst, dass ein aktuelles AM die PCS durchläuft, und ein Endpunkt des Zeitfensters der Zeitpunkt ist, zu dem die MAC ein nächstes AM erfasst.

5. Verfahren nach Anspruch 3, wobei das Verfahren nach dem Zurückübermitteln des AM-Sendezeitstempels durch das 1588-Zeitstempel-Hinzufügungsfunktionsmodul an eine MAC ferner umfasst:
Zwischenspeichern des AM-Sendezeitstempels; und
Aktualisieren des zwischengespeicherten AM-Sendezeitstempels, wenn ein nächster AM-Sendezeitstempel empfangen wird.

6. Verfahren nach Anspruch 5, wobei das Tragen des AM-Sendezeitstempels durch die MAC in der entsprechenden übertragenen 1588-Ereignisnachricht umfasst:
Zwischenspeichern der 1588-Ereignisnachricht, die von einem Protokoll höherer Schicht übertragen wird; und
Senden der zwischengespeicherten 1588-Ereignisnachricht in dem Sendezeitfenster, Abrufen eines AM-Zeitstempels aus dem zwischengespeicherten AM-Sendezeitstempel während der Übertragung und Einfügen des AM-Zeitstempels in ein Zeitstempelfeld der 1588-Ereignisnachricht.

7. Verfahren nach Anspruch 1, wobei das Hinzufügen eines Empfangszeitstempels zu dem AM-Signal umfasst:
Erkennen, wenn das AM zusammen mit einem empfangenen Datenstrom die Schnittstelle zwischen der PCS und der PMA durchläuft, einer Anwesenheit des AM durch AM-Erkennungslogik und Informieren eines 1588-Zeitstempel-Hinzufügungsfunktionsmoduls, den AM-Empfangszeitstempel aufzuzeichnen;
Zurückübermitteln des AM-Empfangszeitstempels durch das 1588-Zeitstempel-Hinzufügungsfunktionsmodul an eine MAC; und
Zuordnen des AM-Empfangszeitstempels durch die MAC zu der entsprechenden empfangenen 1588-Ereignisnachricht und Melden des AM-Empfangszeitstempels an ein Protokoll höherer Schicht.

8. Verfahren nach Anspruch 1, wobei die PCS eine Mehrkanal-PCS oder eine Einkanal-PCS ist und, wenn die PCS eine Mehrkanal-PCS ist, der Zeitstempel nur zu einem AM-Signal in einem einzigen Kanal hinzugefügt wird.

9. Vorrichtung zur Zeitsynchronisation von Ethernet, umfassend:
ein Zeitstempel-Hinzufügungsfunktionsmodul, konfiguriert zum Hinzufügen eines Zeitstempels zu einem Alignment-Masken-, AM,-Signal an einer Schnittstelle zwischen einer physikalischen Codierungsteilschicht, PCS, und einer physikalischen Medienanpassung, PMA, in einer physikalischen Schicht, PHY, von Ethernet;
ein Medienzugriffssteuerungs-, MAC,-Modul, konfiguriert, den AM-Zeitstempel in einer entsprechenden 1588-Ereignisnachricht zu tragen; und
ein Protokollfunktionsmodul höherer Schicht, konfiguriert, eine Zeitsynchronisation entsprechend dem AM-Zeitstempel durchzuführen, der in einer gesendeten oder empfangenen 1588-Ereignisnachricht übertragen wird,
wobei der AM-Zeitstempel einen AM-Sendezeitstempel und einen AM-Empfangszeitstempel umfasst;
wobei die Vorrichtung ferner umfasst:
AM-Erkennungslogik, konfiguriert, wenn das AM zusammen mit einem übertragenen Datenstrom die Schnittstelle zwischen der PCS und der PMA durchläuft, eine Anwesenheit des AM zu erkennen und das Zeitstempel-Hinzufügungsfunktionsmodul zu veranlassen, den AM-Sendezeitstempel aufzuzeichnen; wobei
das Zeitstempel-Hinzufügungsfunktionsmodul ferner konfiguriert ist, den AM-Sendezeitstempel zurück an das MAC-Modul zu übermitteln; und
das MAC-Modul ferner konfiguriert ist, den AM-Sendezeitstempel in der entsprechenden übertragenen 1588-Ereignisnachricht zu tragen.

10. Vorrichtung nach Anspruch 9, wobei das MAC-Modul ferner konfiguriert ist, eine Erzeugungszeit des AM zu erfassen;
wobei das MAC-Modul ferner konfiguriert ist, ein Zeitfenster zum Senden der 1588-Ereignisnachricht durch Verwenden der erfassten Erzeugungszeit des AM als Startpunkt zu erhalten und die 1588-Ereignisnachricht in dem Zeitfenster zu übertragen;
wobei ein Startpunkt des Zeitfensters später ist als der Zeitpunkt, zu dem der AM-Zeitstempel an die MAC zurückgegeben wird, nachdem der Zeitstempel durch das 1588-Zeitstempel-Hinzufügungsfunktionsmodul zu dem an der Schnittstelle zwischen der PCS und der PMA erkannten AM-Signal hinzugefügt wird, wenn die MAC erfasst, dass ein aktuelles AM die PCS durchläuft, und ein Endpunkt des Zeitfensters der Zeitpunkt ist, zu dem die MAC ein nächstes AM erfasst.

11. Vorrichtung nach Anspruch 10, ferner umfassend:
ein Zeitstempel-Zwischenspeichermodul, konfiguriert, den AM-Sendezeitstempel zwischenzuspeichern und den zwischengespeicherten AM-Sendezeitstempel zu aktualisieren, wenn ein nächster AM-Sendezeitstempel empfangen wird;
ein 1588-Ereignisnachrichten-Zwischenspeichermodul, konfiguriert, die 1588-Ereignisnachricht, die von einem Protokoll höherer Schicht übertragen wird, zwischenzuspeichern; und
ein Zeitstempel-Einfügemodul, konfiguriert, die zwischengespeicherte 1588-Ereignisnachricht in dem Sendezeitfenster zu übertragen, einen AM-Zeitstempel aus dem zwischengespeicherten AM-Sendezeitstempel während der Übertragung abzurufen und den AM-Zeitstempel in ein Zeitstempelfeld der 1588-Ereignisnachricht einzufügen.

12. Vorrichtung nach Anspruch 9, ferner umfassend:
AM-Erkennungslogik, konfiguriert, wenn das AM zusammen mit einem empfangenen Datenstrom die Schnittstelle zwischen der PCS und der PMA durchläuft, eine Anwesenheit des AM durch AM-Erkennungslogik zu erkennen und ein Zeitstempel-Hinzufügungsfunktionsmodul zu veranlassen, den AM-Empfangszeitstempel aufzuzeichnen; wobei
das Zeitstempel-Hinzufügungsfunktionsmodul ferner konfiguriert ist, den AM-Empfangszeitstempel zurück an eine MAC zu übermitteln; und
das MAC-Modul ferner konfiguriert ist, den AM-Empfangszeitstempel der entsprechenden empfangenen 1588-Ereignisnachricht zuzuordnen und den AM-Empfangszeitstempel an ein Protokoll höherer Schicht zu melden.

## Revendications

1. Procédé de synchronisation temporelle d'Ethernet, comprenant :
l'ajout d'un horodatage à un signal de masque d'alignement, AM, à une interface entre une sous-couche de codage physique, PCS, et une adaptation au support physique, PMA, dans une couche physique, PHY, d'Ethernet ;
le transport de l'horodatage AM dans un message d'événement 1588 correspondant ; et
l'exécution d'une synchronisation temporelle en fonction de l'horodatage AM transporté dans un message d'événement 1588 transmis ou reçu,
le fait d'ajouter un horodatage à un signal AM comprenant :
l'ajout d'un horodatage d'émission au signal AM et l'ajout d'un horodatage de réception au signal AM,
le fait d'ajouter un horodatage d'émission au signal AM comprenant :
la détection, lorsqu'un AM traverse l'interface entre la PCS et la PMA avec un flux de données transmis, de la présence de l'AM par une logique de détection d'AM, et l'information d'un module de fonction d'ajout d'horodatage 1588 pour enregistrer l'horodatage d'émission AM ;
la restitution, par le module de fonction d'ajout d'horodatage 1588, de l'horodatage d'émission AM vers un contrôle d'accès au média, MAC ; et
le transport, par le MAC, de l'horodatage d'émission AM dans le message d'événement 1588 transmis correspondant.

2. Procédé selon la revendication 1, dans lequel, avant que l'AM ne traverse l'interface entre la PCS et la PMA avec un flux de données transmis, le procédé comprend en outre :
la détection, par le MAC, du temps de génération de l'AM.

3. Procédé selon la revendication 2, dans lequel, avant le transport, par le MAC, de l'horodatage d'émission AM dans le message d'événement 1588 transmis correspondant, le procédé comprend en outre :
l'obtention, par le MAC, d'une fenêtre de temps pour l'émission du message d'événement 1588 en prenant le temps de génération détecté de l'AM comme point de départ, et l'émission du message d'événement 1588 dans la fenêtre de temps.

4. Procédé selon la revendication 3, dans lequel un point de départ de la fenêtre de temps est postérieur au moment où l'horodatage AM est renvoyé au MAC après que l'horodatage est ajouté, par le module de fonction d'ajout d'horodatage 1588, au signal AM détecté à l'interface entre la PCS et la PMA lorsque le MAC détecte qu'un AM courant traverse la PCS, et un point de fin de la fenêtre de temps est le moment où le MAC détecte un AM suivant.

5. Procédé selon la revendication 3, dans lequel, après la restitution, par le module de fonction d'ajout d'horodatage 1588, de l'horodatage d'émission AM vers un MAC, le procédé comprend en outre :
la mise en cache de l'horodatage d'émission AM ; et
la mise à jour de l'horodatage d'émission AM mis en cache lorsqu'un horodatage d'émission AM suivant est reçu.

6. Procédé selon la revendication 5, dans lequel le transport, par le MAC, de l'horodatage d'émission AM dans le message d'événement 1588 transmis correspondant comprend :
la mise en cache du message d'événement 1588 transmis par un protocole de couche supérieure ; et
l'émission du message d'événement 1588 mis en cache dans la fenêtre de temps d'émission, l'extraction d'un horodatage AM à partir de l'horodatage d'émission AM mis en cache pendant la transmission et l'insertion de l'horodatage AM dans un champ d'horodatage du message d'événement 1588.

7. Procédé selon la revendication 1, dans lequel l'ajout d'un horodatage de réception au signal AM comprend :
la détection, lorsque l'AM traverse l'interface entre la PCS et la PMA avec un flux de données reçu, de la présence de l'AM par une logique de détection d'AM, et l'information d'un module de fonction d'ajout d'horodatage 1588 pour enregistrer l'horodatage de réception AM ;
la restitution, par le module de fonction d'ajout d'horodatage 1588, de l'horodatage de réception AM vers un MAC ; et
l'association, par le MAC, de l'horodatage de réception AM au message d'événement 1588 reçu correspondant, et la notification de l'horodatage de réception AM à un protocole de couche supérieure.

8. Procédé selon la revendication 1, dans lequel la PCS est une PCS multicanal ou une PCS monocanal, et lorsque la PCS est une PCS multicanal, l'horodatage est ajouté à un signal AM dans un seul canal.

9. Appareil pour la synchronisation temporelle d'Ethernet, comprenant :
un module de fonction d'ajout d'horodatage, configuré pour ajouter un horodatage à un signal de masque d'alignement, AM, à une interface entre une sous-couche de codage physique, PCS, et une adaptation au support physique, PMA, dans une couche physique, PHY, d'Ethernet ;
un module de contrôle d'accès au média, MAC, configuré pour transporter l'horodatage AM dans un message d'événement 1588 correspondant ; et
un module de fonction de protocole de couche supérieure, configuré pour exécuter une synchronisation temporelle en fonction de l'horodatage AM transporté dans un message d'événement 1588 transmis ou reçu,
l'horodatage AM comprenant un horodatage d'émission AM et un horodatage de réception AM ;
l'appareil comprenant en outre :
une logique de détection d'AM, configurée pour détecter, lorsque l'AM traverse l'interface entre la PCS et la PMA avec un flux de données transmis, la présence de l'AM, et pour demander au module de fonction d'ajout d'horodatage d'enregistrer l'horodatage d'émission AM ; dans lequel
le module de fonction d'ajout d'horodatage est en outre configuré pour renvoyer l'horodatage d'émission AM vers le module MAC ; et
le module MAC est en outre configuré pour transporter l'horodatage d'émission AM dans le message d'événement 1588 transmis correspondant.

10. Appareil selon la revendication 9, dans lequel le module MAC est en outre configuré pour détecter le temps de génération de l'AM ;
le module MAC étant en outre configuré pour obtenir une fenêtre de temps pour l'émission du message d'événement 1588 en prenant le temps de génération détecté de l'AM comme point de départ, et pour transmettre le message d'événement 1588 dans la fenêtre de temps ;
dans lequel un point de départ de la fenêtre de temps est postérieur au moment où l'horodatage AM est renvoyé au MAC après que l'horodatage est ajouté, par le module de fonction d'ajout d'horodatage 1588, au signal AM détecté à l'interface entre la PCS et la PMA lorsque le MAC détecte qu'un AM courant traverse la PCS, et un point de fin de la fenêtre de temps est le moment où le MAC détecte un AM suivant.

11. Appareil selon la revendication 10, comprenant en outre :
un module de mise en cache d'horodatage, configuré pour mettre en cache l'horodatage d'émission AM, et pour mettre à jour l'horodatage d'émission AM mis en cache lorsqu'un horodatage d'émission AM suivant est reçu ;
un module de mise en cache de message d'événement 1588, configuré pour mettre en cache le message d'événement 1588 transmis par un protocole de couche supérieure ; et
un module d'insertion d'horodatage, configuré pour transmettre le message d'événement 1588 mis en cache dans la fenêtre de temps d'émission, extraire un horodatage AM à partir de l'horodatage d'émission AM mis en cache pendant la transmission et insérer l'horodatage AM dans un champ d'horodatage du message d'événement 1588.

12. Appareil selon la revendication 9, comprenant en outre :
une logique de détection d'AM, configurée pour détecter, lorsque l'AM traverse l'interface entre la PCS et la PMA avec un flux de données reçu, la présence de l'AM par une logique de détection d'AM, et pour demander à un module de fonction d'ajout d'horodatage d'enregistrer l'horodatage de réception AM ; dans lequel
le module de fonction d'ajout d'horodatage est en outre configuré pour renvoyer l'horodatage de réception AM vers un MAC ; et
le module MAC est en outre configuré pour associer l'horodatage de réception AM au message d'événement 1588 reçu correspondant, et pour notifier l'horodatage de réception AM à un protocole de couche supérieure.
